# EUROPEAN PATENT APPLICATION

(11) **EP 4 353 385 A1**
(43) Date of publication of application: **17.04.2024**
(21) Application number: 23184948.0
(22) Date of filing: 12.07.2023
(51) Int. Cl.: B22F 12/49, B22F 10/366, B28B 1/00, B29C 64/264, B29C 64/393, B33Y 10/00, B33Y 30/00, B33Y 50/02, G02B 26/08, B22F 10/36

(54) **ADDITIVE MANUFACTURING METHODS AND SYSTEMS**

(30) Priority: 15.07.2022 US 202263389392 P
(71) Applicant: General Electric Company, Schenectady, NY 12345 (US)
(72) Inventor: Immer, Christopher Darby, Niskayuna, 12309 (US); Filkins, Robert John, Niskayuna, 12309 (US); Ostroverkhov, Victor Petrovich, Niskayuna, 12309 (US); Jeong, Younkoo, Niskayuna, 12309 (US); Adcock, Thomas Charles, Niskayuna, 12309 (US); Klapper, Christopher J., Niskayuna, 12309 (US)
(74) Representative: Hafner & Kohl PartmbB

(57) **Abstract**

Additive manufacturing methods and systems are disclosed including irradiation devices for an additive manufacturing machine for additively manufacturing three-dimensional objects. The irradiation device includes a beam generation device configured to provide an energy beam travelling on a nominal beam path trajectory and an optical modulator comprising a reflective optic downstream from the beam generating device, wherein the optical modulator is configured to actuate the reflective optic to modify a position of the energy beam from the nominal beam path trajectory. The irradiation device further includes an optical scanner disposed downstream from the optical modulator, wherein the optical scanner is configured to translate the nominal beam path trajectory along a build plane of the additive manufacturing machine.

## Description

### PRIORITY INFORMATION

The present application claims priority to U.S. Provisional Patent Application Serial Number 63/389,392 filed on July 15, 2022, which is incorporated by reference herein in its entirety for all purposes.

### FIELD

The present disclosure relates to additive manufacturing methods and systems, such as additive manufacturing methods and systems for translating energy beams.

### BACKGROUND

Three-dimensional objects may be additively manufactured using a variety of methods and systems. For example, additive manufacturing may involve a powder bed fusion process in which one or more energy beams are directed onto a powder bed to melt, fuse, or sinter sequential layers of build material such as powder material. The properties of the three-dimensional object formed by consolidating the powder material depend, at least in part, on one or more parameters of the energy beam. Additionally, one or more parameters of an energy beam impact operating parameters such as processing speed of the additive manufacturing process.

In some additive manufacturing systems, one or more components can be used for translating the one or more energy beams onto the powder bed. For example, mirrors, focal optics, and scanners can be used to move the energy beam to the powder bed. These components can also adjust one or more parameters of the energy beam such as spot size or focal distance. These components and their controlled adjustment impact the properties of the three-dimensional object formed during additive manufacturing three-dimensional object.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIGs. 1A and 1B schematically depict exemplary additive manufacturing systems or machines in accordance with one or more exemplary aspects of the present disclosure;
FIGs. 2A and 2B schematically depict further exemplary additive manufacturing systems or machines in accordance with one or more exemplary aspects of the present disclosure;
FIG. 3 schematically depicts further exemplary additive manufacturing systems or machines in accordance with one or more exemplary aspects of the present disclosure;
FIG. 4 schematically depicts an energy beam path on a build plane in accordance with one or more exemplary aspects of the present disclosure;
FIGs. 5A through 5D depict an exemplary optical modulator for additive manufacturing systems or machines in accordance with one or more exemplary aspects of the present disclosure;
FIG. 6 schematically depicts an exemplary controls system that may be configured to control an additive manufacturing system or machine;
FIG. 7 schematically depicts an exemplary method of additively manufacturing a three-dimensional object in accordance with one or more exemplary aspects of the present disclosure; and
FIG. 8 schematically depicts another exemplary method of additively manufacturing a three-dimensional object in accordance with one or more exemplary aspects of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

As described herein, the presently disclosed subject matter involves the use of additive manufacturing machines or systems. As used herein, the term "additive manufacturing" refers generally to manufacturing technology in which components are manufactured in a layer-by-layer manner. An exemplary additive manufacturing machine may be configured to utilize any suitable additive manufacturing technology. The additive manufacturing machine may utilize an additive manufacturing technology that includes a powder bed fusion (PBF) technology, such as a direct metal laser melting (DMLM) technology, an electron beam melting (EBM) technology, a selective laser melting (SLM) technology, a directed metal laser sintering (DMI,S) technology, or a selective laser sintering (SLS) technology. In an exemplary PBF technology, thin layers of powder material are sequentially applied to a build plane and then selectively melted or fused to one another in a layer-by-layer manner to form one or more three-dimensional objects. Additively manufactured objects are generally monolithic in nature and may have a variety of integral subcomponents.

Additionally or alternatively suitable additive manufacturing technologies may include, for example, Fused Deposition Modeling (FDM) technology, Direct Energy Deposition (DED) technology, Laser Engineered Net Shaping (LENS) technology, Laser Net Shape Manufacturing (LNSM) technology, Direct Metal Deposition (DMD) technology, Digital Light Processing (DLP) technology, and other additive manufacturing technologies that utilize an energy beam or other energy source to solidify an additive manufacturing material such as a powder material. In fact, any suitable additive manufacturing modality may be utilized with the presently disclosed the subject matter.

Additive manufacturing technology may generally be described as fabrication of objects by building objects point-by-point, line-by-line, layer-by-layer, typically in a vertical direction. Other methods of fabrication are contemplated and within the scope of the present disclosure. For example, although the discussion herein refers to the addition of material to form successive layers, the presently disclosed subject matter may be practiced with any additive manufacturing technology or other manufacturing technology, including layer-additive processes, layer-subtractive processes, or hybrid processes.

The additive manufacturing processes described herein may be used for forming components using any suitable material. For example, the material may be metal, ceramic, polymer, epoxy, photopolymer resin, plastic, or any other suitable material that may be in solid, powder, sheet material, wire, or any other suitable form, or combinations thereof. Additionally, or in the alternative, exemplary materials may include metals, ceramics, or binders, as well as combinations thereof. Exemplary ceramics may include ultra-high-temperature ceramics, or precursors for ultra-high-temperature ceramics, such as polymeric precursors. Each successive layer may be, for example, between about 10 µm and 200 µm, although the thickness may be determined based on any number of parameters and may be any suitable size. Moreover, the additive manufacturing process described herein may be used for forming any type of suitable component. For example, the component formed using the additive manufacturing process described herein may comprise one or more turbine components such as turbine blades, shrouds, nozzles, heat shields, or vanes.

As used herein, the term "build plane" refers to a plane defined by a surface upon which an energy beam impinges to selectively irradiate and thereby consolidate powder material during an additive manufacturing process. Generally, the surface of a powder bed defines the build plane. During irradiation of a respective layer of the powder bed, a previously irradiated portion of the respective layer may define a portion of the build plane. Prior to distributing powder material across a build module, a build plate that supports the powder bed generally defines the build plane.

As used herein, the term "consolidate" or "consolidating" refers to solidification of build material (e.g., powder material) as a result of irradiating the build material, including by way of melting, fusing, sintering, or the like such that multiple separate pieces of build material (e.g., multiple individual pieces of powder material) join together into a single structure.

As used herein, the term "unconsolidated" refers to separate pieces of material that are not bonded or otherwise joined to one another, such as separate pieces of loose powder.

It is also understood that terms such as "top", "bottom", "outward", "inward", and the like are words of convenience and are not to be construed as limiting terms.

As used herein, the terms "first", "second", and "third" may be used interchangeably to distinguish one component from another and are not intended to signify location or importance of the individual components.

The terms "a" and "an" do not denote a limitation of quantity, but rather denote the presence of at least one of the referenced item.

Approximating language, as used herein throughout the specification and claims, may be applied to modify any quantitative representation that could permissibly vary without resulting in a change in the basic function to which it is related. Accordingly, a value modified by a term or terms, such as "about," "substantially," and "approximately," are not to be limited to the precise value specified. In at least some instances, the approximating language may correspond to the precision of an instrument for measuring the value, or the precision of the methods or machines for constructing or manufacturing the components or systems. For example, the approximating language may refer to being within a 10 percent margin.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The present disclosure is generally related to additive manufacturing methods and systems to build three-dimensional objects. One or more energy beams in such systems can be used to build various features including walls to define, for example, an outer surface, an internal feature, or an internal support lattice of a three-dimensional object. However, the minimal obtainable thickness of the wall may be inhibited by requiring multiple passes of an energy beam. Moreover, the uniformity of the consolidated build material within the small structures may be challenged when utilizing multiple passes or multiple energy beams. Further, tracking errors can develop due to miscalibration, laser drift, or the inherent nature of transitional movements of reflective optics not being instantaneous.

Accordingly, alternative additive manufacturing methods and systems would be welcomed in the art. The irradiation devices, additive manufacturing systems, and additive manufacturing methods provided herein utilize a first device to impart smaller scale yet faster modification of the energy beam to deviate it from its original trajectory. The irradiation devices, additive manufacturing systems, and additive manufacturing methods further provide a second device to impart larger scale, albeit slower, translational movement of the energy beam on the build plane. The modified beam position provides select deviations from the nominal beam path trajectory to correct from tracking errors and/or facilitate modified build characteristics such as creating a larger melt pool through beam wobbling.

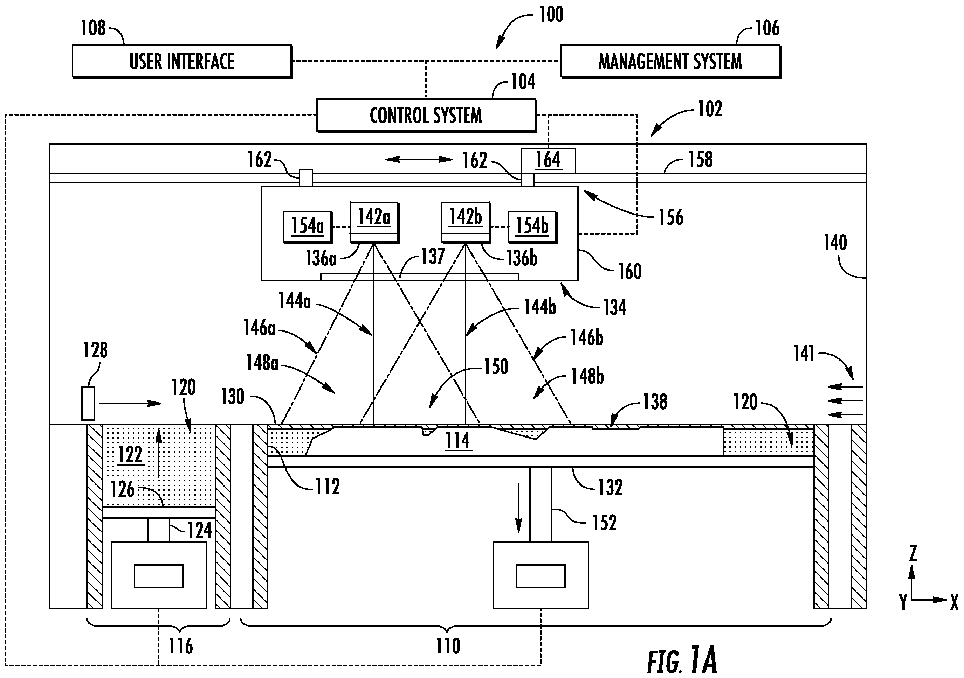

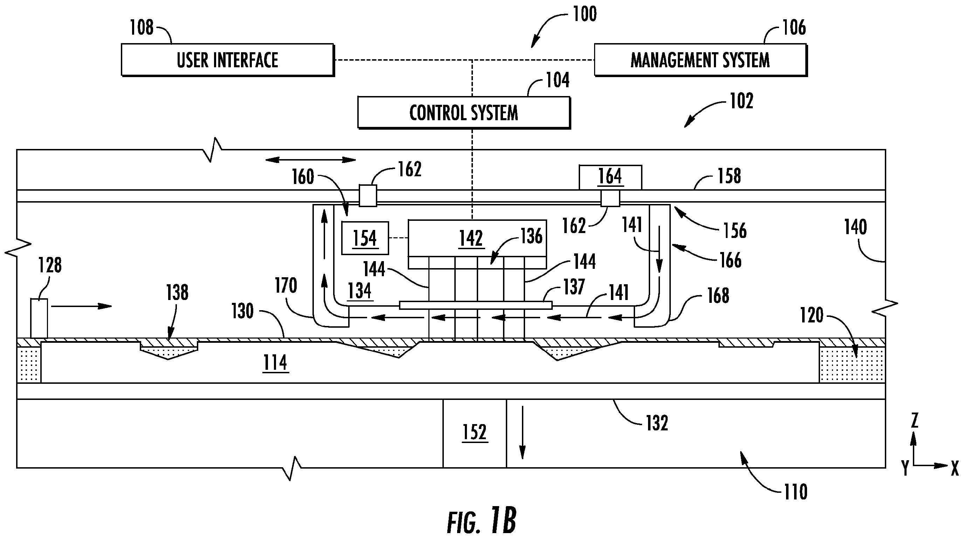

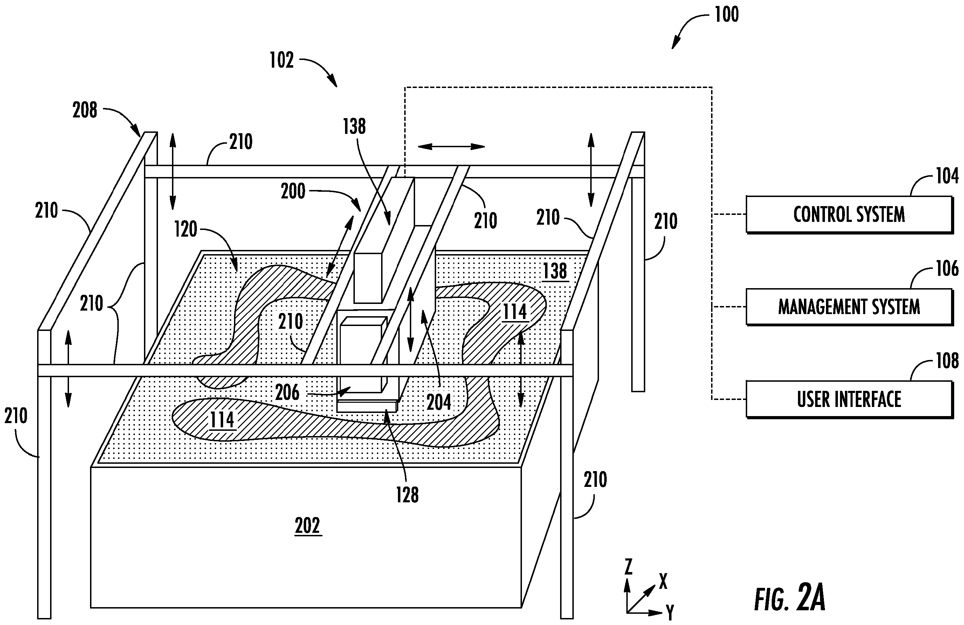

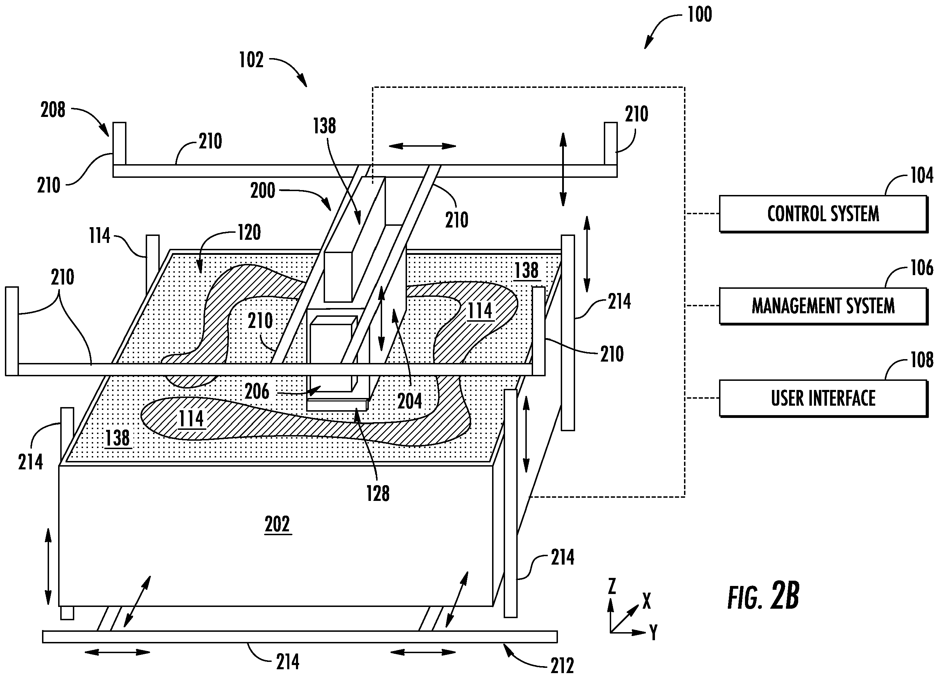

Referring now to the drawings, wherein identical numerals indicate the same elements throughout the figures. FIGs. 1A and 1B, and FIGs. 2A and 2B, schematically depict exemplary additive manufacturing systems 100. As shown, an additive manufacturing system 100 may include one or more additive manufacturing machines 102. It will be appreciated that the additive manufacturing systems 100 and additive manufacturing machines 102 shown in FIGs. 1A and 1B, and FIGs. 2A and 2B, are provided by way of example and not to be limiting. In fact, the subject matter of the present disclosure may be practiced with any suitable additive manufacturing system 100 and additive manufacturing machine 102 without departing from the scope of the present disclosure.

As shown, the one or more additive manufacturing machines 102 may include a control system 104. The control system 104 may be included as part of the additive manufacturing machine 102 or the control system 104 may be associated with the additive manufacturing machine 102. The control system 104 may include componentry integrated as part of the additive manufacturing machine 102 and/or componentry that is provided separately from the additive manufacturing machine 102. Various componentry of the control system 104 may be communicatively coupled to various componentry of the additive manufacturing machine 102.

The control system 104 may be communicatively coupled with a management system 106 and/or a user interface 108. The management system 106 may be configured to interact with the control system 104 in connection with enterprise-level operations pertaining to the additive manufacturing system 100. Such enterprise level operations may include transmitting data from the management system 106 to the control system 104 and/or transmitting data from the control system 104 to the management system 106. The user interface 108 may include one or more user input/output devices to allow a user to interact with the additive manufacturing system 100.

As shown, for example, in FIG. 1A, an additive manufacturing machine 102 may include a build module 110 that includes a build chamber 112 within which an object or three-dimensional objects 114 may be additively manufactured. An additive manufacturing machine 102 may include a powder module 116 that contains a supply of powder material 120 housed within a supply chamber 122. The build module 110 and/or the powder module 116 may be provided in the form of modular containers configured to be installed into and removed from the additive manufacturing machine 102 such as in an assembly-line process. Additionally, or in the alternative, the build module 110 and/or the powder module 116 may define a fixed componentry of the additive manufacturing machine 102.

The powder module 116 may include a powder piston 124 that actuates a powder supply floor 126 during operation of the additive manufacturing machine 102. As the powder supply floor 126 actuates, a portion of the powder material 120 is forced out of the powder module 116. A recoater 128 such as a blade or roller sequentially distributes thin layers of powder material 120 across a build plane 130 above the build module 110. A build platform 132 supports the sequential layers of powder material 120 distributed across the build plane 130. A build platform 132 may include a build plate (not shown) secured thereto and upon which a three-dimensional object 114 may be additively manufactured.

As shown, for example, in FIGs. 1A and 1B, an additive manufacturing machine 102 may include an energy beam system 134 configured to generate one or more of energy beams and to direct the respective energy beams onto the build plane 130 to selectively solidify respective portions of the powder bed 138 defining the build plane 130. The energy beams may be laser beams or beams from any other suitable energy source, such as LEDs or other light sources, and so forth. As the respective energy beams selectively melt or fuse the sequential layers of powder material 120 that define the powder bed 138, the three-dimensional object 114 begins to take shape. The one or more energy beams or laser beams may include electromagnetic radiation having any suitable wavelength or wavelength range, such as a wavelength or wavelength range corresponding to infrared light, visible light, and/or ultraviolet light.

Typically, with a DMI,M, EBM, or SLM system, the powder material 120 is fully melted, with respective layers being melted or re-melted with respective passes of the energy beams. With DMLS or SLS systems, typically the layers of powder material 120 are sintered, fusing particles of powder material 120 to one another generally without reaching the melting point of the powder material 120. The energy beam system 134 may include componentry integrated as part of the additive manufacturing machine 102 and/or componentry that is provided separately from the additive manufacturing machine 102.

The energy beam system 134 may include one or more irradiation devices 142 configured to generate a plurality of energy beams 144 and to direct the energy beams 144 upon the build plane 130. As shown, for example, in FIG. 1A, an energy beam system 134 may include a plurality of irradiation devices 142, such as a first irradiation device 142a and a second irradiation device 142b. The one or more irradiation devices may respectively include an energy beam source, a scanner, and optical assembly. The optical assembly may include a plurality of optical elements 136 configured to direct the energy beam onto the build plane 130. By way of example, the one or more optical elements 136 may include one more focusing lenses that focus an energy beam144 on a build plane 130. Additionally, or in the alternative, the energy beam system 134 may include a window, such as a protective glass, that separates one or more components of the energy beam system 134 from the environment of a process chamber 140 within which powder material 120 is irradiated by the one or more energy beams 144 to additively manufacture a three-dimensional object 114.

A flow of inert process gas 141 may be supplied to the process chamber 140, for example, to remove contaminants such as fumes and soot from the process chamber 140 and/or to reduce the tendency of such contaminants to deposit on the on the window, optical elements 136, or other componentry of the energy beam system 134. Additionally, or in the alternative, the flow if inert process gas 141 may reduce the tendency of such contaminants to interfere with the energy beams 144 used to irradiate the powder material 120.

The plurality of energy beams 144 may become incident upon the build plane 130, for example, after passing through one or more optical elements 136 and/or a window of the energy beam system 134. Additionally, or in the alternative, an irradiation device 142 may include a scanner configured to direct the plurality of energy beams 144 onto the powder bed 138. An exemplary scanner may include a galvo scanner, an electro-optic modulator, an acousto-optic modulator, a piezo-driven mirror, or the like. To irradiate a layer of the powder bed 138, the one or more irradiation devices 142 respectively direct the plurality of energy beams 144 across the respective portions of the build plane 130 to melt or fuse the portions of the powder material 120 that are to become part of the three-dimensional object 114.

As shown in FIG. 1A, the energy beam system 134 may include a first irradiation device 142a and a second irradiation device 142b. The first irradiation device 142a may include a first optical assembly that includes a first one or more optical elements 136a, and/or the second irradiation device 142b may include a second optical assembly that includes a second one or more optical elements 136b. Additionally, or in the alternative, an energy beam system 134 may include three, four, six, eight, ten, or more irradiation devices, and such irradiation devices may respectively include an optical assembly that includes one or more optical elements 136. The plurality of irradiation devices 142 may be configured to respectively generate one or more energy beams that are respectively scannable within a scan field incident upon at least a portion of the build plane 130 to melt or fuse the portions of the powder material 120 that are to become part of the three-dimensional object 114. For example, the first irradiation device 142a may generate a first energy beam 144a that is scannable within a first scan field 146a incident upon at least a first build plane region 148a. The second irradiation device 142b may generate a second energy beam 144b that is scannable within a second scan field 146b incident upon at least a second build plane region 148b. The first scan field 146a and the second scan field 146b may overlap such that the first build plane region 148a scannable by the first energy beam 144a overlaps with the second build plane region 148b scannable by the second energy beam 144b. The overlapping portion of the first build plane region 148a and the second build plane region 148b may sometimes be referred to as an interlace region 150. Portions of the powder bed 138 to be irradiated within the interlace region 150 may be irradiated by the first energy beam 144a and/or the second energy beam 144b in accordance with the present disclosure.

To irradiate a layer of the powder bed 138, the one or more irradiation devices (e.g., the first irradiation device 142a and the second irradiation device 142b) respectively direct the plurality of energy beams (e.g., the first energy beam 144a and the second energy beam 144b) across the respective portions of the build plane 130 (e.g., the first build plane region 148a and the second build plane region 148b) to melt or fuse the portions of the powder material 120 that are to become part of the three-dimensional object 114. The first layer or series of layers of the powder bed 138 are typically melted or fused to the build platform 132, and then sequential layers of the powder bed 138 are melted or fused to one another to additively manufacture the three-dimensional object 114. As sequential layers of the powder bed 138 are melted or fused to one another, a build piston 152 gradually moves the build platform 132 to make room for sequential layers of powder material 120. As the build piston 152 gradually lowers and sequential layers of powdered material 120 are applied across the build plane 130, the next sequential layer of powder material 120 defines the surface of the powder bed 138 coinciding with the build plane 130. Sequential layers of the powder bed 138 may be selectively melted or fused until a completed object 114 has been additively manufactured.

Still referring to FIGs. 1A and 1B, an additive manufacturing machine 102 may include an imaging system 154 configured to monitor one or more operating parameters of an additive manufacturing machine 102, one or more parameters of an energy beam system 134, and/or one or more operating parameters of an additive manufacturing process. The imaging system may a calibration system configured to calibrate one or more operating parameters of an additive manufacturing machine 102 and/or of an additive manufacturing process. The imaging system 154 may be a melt pool monitoring system. The one or more operating parameters of the additive manufacturing process may include operating parameters associated with additively manufacturing a three-dimensional object 114. The imaging system 154 may be configured to detect an imaging beam such as an infrared beam from a laser diode and/or a reflected portion of an energy beam (e.g., a first energy beam 144a and/or a second energy beam 144b).

An energy beam system 134 and/or an imaging system 154 may include one or more detection devices. The one or more detection devices may be configured to determine one or more parameters of an energy beam system 134, such as one or more parameters associated with irradiating the sequential layers of the powder bed 138 based at least in part on an assessment beam detected by the imaging system 154. One or more parameters associated with irradiating the sequential layers of the powder bed 138 may include irradiation parameters and/or object parameters, such as melt pool monitoring parameters. The one or more parameters determined by the imaging system 154 may be utilized, for example, by the control system 104, to control one or more operations of the additive manufacturing machine 102 and/or of the additive manufacturing system 100. The one or more detection devices may be configured to obtain assessment data of the build plane 130 from a respective assessment beam. An exemplary detection device may include a camera, an image sensor, a photo diode assembly, or the like. For example, a detection device may include charge-coupled device (e.g., a CCD sensor), an active-pixel sensor (e.g., a CMOS sensor), a quanta image device (e.g., a QIS sensor), or the like. A detection device may additionally include a lens assembly configured to focus an assessment beam along a beam path to the detection device. An imaging system 154 may include one or more imaging optical elements (not shown), such as mirrors, beam splitters, lenses, and the like, configured to direct an assessment beam to a corresponding detection device.

In addition, or in the alternative to determining parameters associated with irradiation the sequential layers of the powder bed 138, the imaging system 154 may be configured to perform one or more calibration operations associated with an additive manufacturing machine 102, such as a calibration operation associated with the energy beam system 134, one or more irradiation devices 142 or components thereof, and/or the imaging system 154 or components thereof. The imaging system 154 may be configured to project an assessment beam and to detect a portion of the assessment beam reflected from the build plane 130. The assessment beam may be projected by an irradiation device 142 and/or a separate beam source associated with the imaging system 154. Additionally, and/or in the alternative, the imaging system 154 may be configured to detect an assessment beam that includes radiation emitted from the build plane 130, such as radiation from an energy beam 144 reflected from the powder bed 138 and/or radiation emitted from a melt pool in the powder bed 138 generated by an energy beam 144 and/or radiation emitted from a portion of the powder bed 138 adjacent to the melt pool. The imaging system 154 may include componentry integrated as part of the additive manufacturing machine 102 and/or componentry that is provided separately from the additive manufacturing machine 102. For example, the imaging system 154 may include componentry integrated as part of the energy beam system 134. Additionally, or in the alternative, the imaging system 154 may include separate componentry, such as in the form of an assembly, that can be installed as part of the energy beam system 134 and/or as part of the additive manufacturing machine 102.

Still referring to FIGs. 1A and 1B, in some embodiments, an additive manufacturing machine may include a positioning system 156 configured to move an energy beam system 134 and/or one or more components thereof relative to the build plane 130. The positioning system 156 may be configured to move the energy beam system 134 and/or one or more components thereof to specified build coordinates and/or along specified build vectors corresponding to a cartesian coordinate system in accordance with control commands provided, for example, by the control system 104. The control commands may be provided, for example, to carry out operations of the one or more energy beam system 134 and/or of the additive manufacturing machine 102 in accordance with the present disclosure. The positioning system 156 may include one or more gantry elements 158 configured to move the energy beam system 134 and/or one or more components thereof across the powder bed. Respective gantry elements 158 may be configured to move the energy beam system 134 and/or one or more components thereof in one or more directions, such as an X-direction, a Y-direction, and/or a Z-direction. In some embodiments, the positioning system 156 may be coupled to a housing assembly 160 that contains one or more components of the energy beam system 134, such as one or more irradiation devices 142 and or one or more imaging systems 154. The housing assembly 160 may be coupled to one or more gantry elements 158 by one or more gantry mounts 162. The positioning system 156 may include a drive motor 164 configured to move the housing assembly 160 and/or the one or more components the energy beam system 134 according to instructions for the control system 104. The positioning system 156 may include componentry typically associated with a gantry system, such as stepper motors, drive elements, carriages, and so forth.

The energy beam system 134 may be positioned at any suitable location within the process chamber 140. Additionally, or in the alternative, the energy beam system 134 may be coupled to a perimeter wall of the process chamber 140. In some embodiments, as shown, for example, in FIG. 1B, an energy beam system 134 may be positioned in close proximity to the build plane 130. As shown in FIG. 1B, an inertization system 166 may supply a flow of inert process gas 141 to a region of the process chamber 140 between the energy beam system 134 and the powder bed 138. The inertization system 166 may include a supply manifold 168 and a return manifold 170. As shown in FIG. 1B, the supply manifold 168 and/or the return manifold 170 may be coupled to the housing assembly 160. With the supply manifold 168 and/or the return manifold 170 coupled to the housing assembly 160, a relatively small volume of space between the energy beam system 134 and the powder bed 138 may be inertized, as opposed to inertizing an entire process chamber 140. Additionally, or in the alternative, contaminants may have a shorter path to travel before being drawn into the return manifold 170 by the flow of inert process gas 141.

Referring now to FIGs. 2A and 2B, an additive manufacturing system 100 or additive manufacturing machine 102 may include one or more build units 200 configured to selectively solidify powder material 120 to additively manufacture a three-dimensional object 114. In some embodiments, the additive manufacturing system 100 or additive manufacturing machine 102 may be configured for large format additive manufacturing. For example, one or more build units 200 may be configured to irradiate a powder bed 138 supported by a build vessel 202 that includes a cross-sectional area that exceeds the cross-sectional area of the one or more build units 200. Likewise, a three-dimensional object 114 additively manufactured with the additive manufacturing machine 102 may have a cross-sectional area that is larger than the one or more build units 200. The one or more build units 200 and/or the build vessel 202 may be movable relative to one another, for example, to perform large-format additive manufacturing operations.

As shown in FIGs. 2A and 2B, an exemplary build unit 200 may include an energy beam system 134 and an irradiation chamber 204. The build unit 200 may be configured to irradiate powder material 120 within a region of the powder bed coinciding the perimeter of the irradiation chamber 204. The one or more build units 200 may be movable relative to the build vessel 202, and/or the build vessel 202 may be movable relative to one or more build units 200. For example, a build unit 200 and/or a build vessel 202 may be movable in one or more directions, such as an X-direction, a Y-direction, and/or a Z-direction. Movement of a build unit 200 relative to the build vessel 202 may be configured to allow the build unit 200 to access various regions of the powder bed 138 so that the energy beam system 134 may irradiate powder material 120 in respective regions. The energy beam system 134 may be configured as described with reference to FIG. 1. The energy beam system 134 may include one or more irradiation devices 142 and/or other components as described herein. The irradiation chamber 204 may be configured to provide an inert environment for irradiating the powder bed 138. A flow of inert process gas may be supplied to the irradiation chamber 204, for example, to remove contaminants such as fumes and soot from the irradiation chamber 204 and/or to reduce the tendency for such contaminants from depositing on the optical elements 136 and/or from interfering with the energy beams 144 used to irradiate the powder material 120. In some embodiments, a build unit 200 may include a powder supply hopper 206 configured to supply powder material 120 to a build vessel 202. Additionally, or in the alternative, powder material 120 may be supplied by a powder module 116 as described with reference to FIG 1.

As shown in FIG. 1, the one or more build units 200 may be operably coupled to a build unit-positioning system 208. The build unit-positioning system 208 may be configured to move the one or more build units 200 to specified build coordinates and/or along specified build vectors corresponding to a three-dimensional cartesian coordinate system in accordance with control commands provided, for example, by the control system 104. The control commands may be provided, for example, to carry out operations of the one or more build units 200 and/or the respective components thereof. The build unit-positioning system 208 may include one or more build unit-gantry elements 210 configured to movably support the one or more build units 200. The build unit-gantry elements 210 may include componentry typically associated with a gantry system, such as stepper motors, drive elements, carriages, and so forth. Respective build unit-gantry elements 210 may be configured to move the one or more build units 200 in one or more directions, such as an X-direction, a Y-direction, and/or a Z-direction.

As shown in FIG. 2A, the one or more build vessels 202 may be operably coupled to a build vessel-positioning system 212. The build vessel-positioning system 212 may be configured to move the build vessel 202 to specified build coordinates and/or along specified build vectors corresponding to a three-dimensional cartesian coordinate system in accordance with control commands provided, for example, by the control system 104. The control commands may be provided, for example, to carry out operations of the one or more build units 200 in accordance with the present disclosure. The build vessel-positioning system 212 may include one or more build vessel-gantry elements 214 configured to movably support the build vessel 202. Respective build vessel-gantry elements 214 may be configured to move the build vessel 202 in one or more directions, such as an X-direction, a Y-direction, and/or a Z-direction.

The one or more build vessels 202 may be operably coupled to a build vessel-positioning system 212 in addition to, or in the alternative to, one or more build units 200 operably coupled to a build unit-positioning system 208. For example, an additive manufacturing machine 102 may include a build vessel-positioning system 212 and one or more stationary build units 200. Additionally, or in the alternative, an additive manufacturing machine 102 may include a build vessel-positioning system 212 and a build unit-positioning system 208. The build vessel-positioning system 212 may be configured to move a build vessel 202 in one or more directions, and the build vessel-positioning system 212 may be configured to move a build vessel 202 in one or more directions. For example, the build vessel-positioning system 212 may be configured to move a build vessel 202 in an X-direction and/or a Y-direction. Additionally, or in the alternative, the build unit-positioning system 208 may be configured to move a build unit 200 in a Z-direction.

A build vessel-positioning system 212 may be configured to move a build vessel 202 horizontally while one or more build units 200 selectively irradiate portions of the powder material 120 in the build vessel 202. For example, the build vessel-positioning system 212 may be configured to move a build vessel 202 in accordance with an X-Y coordinate system. Additionally, or in the alternative, a build unit-positioning system 208 may be configured to move a build unit 200 horizontally while the build unit 200 selectively irradiates portions of the powder material 120 in the build vessel 202. For example, the build vessel-positioning system 212 may be configured to move a build vessel 202 in accordance with an X-Y coordinate system. A vertical position of the one or more build units 200 and/or the build vessel 202 may be augmented in connection with the addition of sequential layers of powder material 120 to the build vessel 202 and selective irradiation of the respective layers of powder material 120 in the build vessel 202. The build vessel-positioning system 212 may be configured to sequentially move the build vessel 202 vertically to provide room for the next sequential layer of powder material 120 to be added to the build vessel 202. Additionally, or in the alternative, the build unit-positioning system 208 may be configured to sequentially move a build unit 200 vertically to provide room for the next sequential layer of powder material 120 to be added to the build vessel 202. Movements of the build unit 200 and/or the build vessel 202 may be carried out before, during, or after, irradiating a sequential layer of powder material 120.

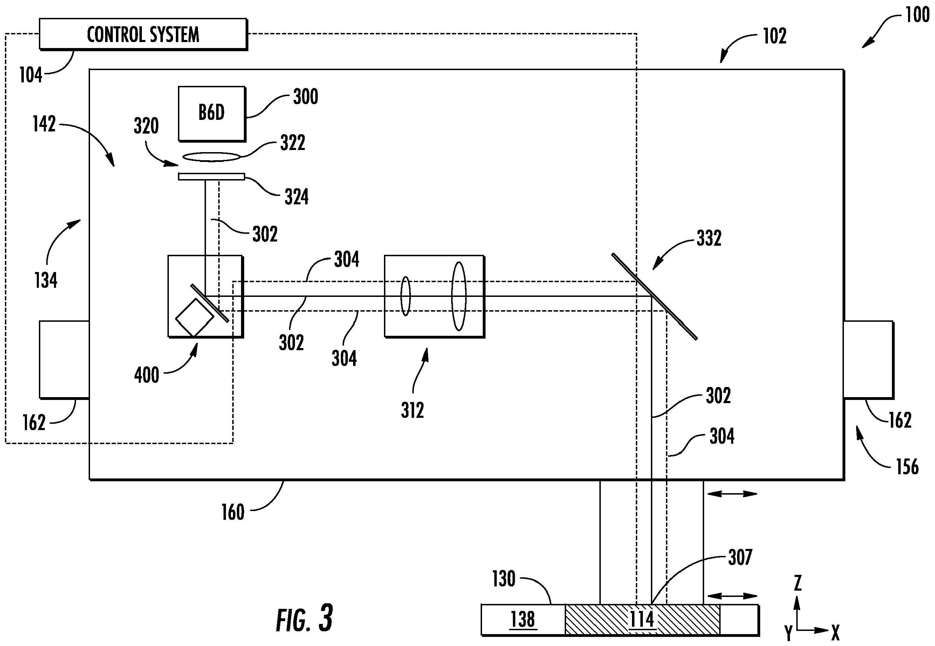

Now referring to FIG. 3, exemplary energy beam systems 134 and irradiation devices 142 are further described. The energy beam system 134 may include one or more irradiation devices 142. The irradiation devices 142 described herein may be utilized in an additive manufacturing system 100 and/or an additive manufacturing machine 102. Other uses are also contemplated. For example, exemplary irradiation device 142 may be utilized in laser welding systems, laser machining systems, laser ablation systems, laser cutting systems, laser drilling systems, laser micromanufacturing systems, and the like.

As shown in FIG. 3, an exemplary irradiation device 142 includes a beam generation device 300. The beam generation device 300 may be configured to provide an energy beam 144. The energy beam 144 may be emitted from the beam generation device 300 with a power level and/or intensity suitable for melting and/or sintering powder material 120. In some embodiments, the power level and/or intensity of the energy beam 144 may be suitable for a conduction irradiation regime.

The energy beam 144 may travel a nominal beam path trajectory 302 that coincides with an optical axis of the energy beam 144, extending from the beam generation device 300. That is, the nominal beam path trajectory 302 thereby refers to the original trajectory of the energy beam 144. As appreciated herein, the energy beam 144 may subsequently be translated in one or more directions by one or more components to deviate from the nominal beam path trajectory 302.

The irradiation device 142 may optionally include a beam conditioning assembly 320 that includes one or more optical elements configured to focus and/or otherwise condition the energy beam 144 prior to becoming incident upon subsequent components such as the optical modulator 400. In some embodiments, the beam conditioning assembly 320 may include a beam collimator 322. The beam collimator 322 may include one or more lenses and/or other optical elements configured to collimate the energy beam 144. Additionally, or in the alternative, the beam conditioning assembly may include a beam homogenizer 324. The beam homogenizer 324 may be configured to provide a uniform power distribution across a cross-sectional profile of the energy beam 144. For example, an energy beam 144 may have a Gaussian power distribution as emitted by an irradiation device 142 and/or after having been collimated by the beam collimator 322. In some embodiments, the beam homogenizer 324 may be configured to provide a top-hat power distribution. Additionally, or in the alternative, the beam homogenizer 324 may be configured to provide a plurality of beam segments that have a substantially uniform intensity and/or powder level. An exemplary beam homogenizer 324 may include one or more microlens arrays in front of a condenser lens. Another exemplary beam homogenizer 324 may include a rod lens or light pipe. Additionally, or in the alternative, the beam homogenizer 324 may include a lens element aperture configured to conform the energy beam 144 to a cross-sectional profile that that corresponds to a surface area of the optical modulator 400. For example, the beam homogenizer 324 may provide an energy beam 144 that exhibits a rectangular cross-sectional profile, such as from an energy beam 144 that exhibits a circular cross-sectional profile.

As shown in FIG. 3, the exemplary irradiation device 142 includes an optical modulator 400 downstream from the beam generating device 300. The optical modulator 400 generally includes a reflective optic 440 that can be actuated to modify a position of the energy beam 144. That is, actuation of the reflective optic 440 modifies the position of the energy beam 144 from the nominal beam path trajectory 302 to provide a modified beam position 304. As appreciated herein, the modified beam position 304 provides select deviations from the nominal beam path trajectory 302 to correct from tracking errors and/or facilitate modified build characteristics such as creating a larger melt pool through beam wobbling. Compared to further downstream components like the optical scanner 332, the optical modulator 400 imparts smaller and/or faster scale movement of the energy beam 144 for small deviations from its original nominal center position. By dedicating the optical modulator 400 to these smaller and/or faster movements, the adjustment rate of the energy beam 144 can exceed the subsequent translational movement of the energy beam 144 across the build plane 130 caused by the optical scanner 332. Additionally, or alternatively, the optical modulator 400 can correct for a tracking error that can exist between the nominal beam path trajectory and the actual intended position.

FIG. 3 illustrates the modified beam position 304 travelling through the irradiation device 142 and onto the build plane 130. The modified beam position 304 comprises the pathway taken by the beam spot 307 as it deviates from the nominal beam path trajectory 302 due to adjustment by the optical modulator 400. That is, the modified beam position 304 is beam path that is based around and selectively and/or intermittently deviates from the original nominal beam path trajectory 302. These deviations may be temporary adjustments, such as to account for sharp turns where the larger scale movements the optical scanner 332 has a slower step response time than desired. Alternatively, or additionally, these deviations may be more continuous deviations such as by oscillating the modified beam position 304 around the nominal beam path trajectory 302 to produce a wobble effect. When travelling the modified beam position 304, the beam spot 307 will travel a distance D away from the nominal beam path trajectory 302. The distance D the beam spot 307 deviates from the nominal beam path trajectory 302 can be constant or vary.

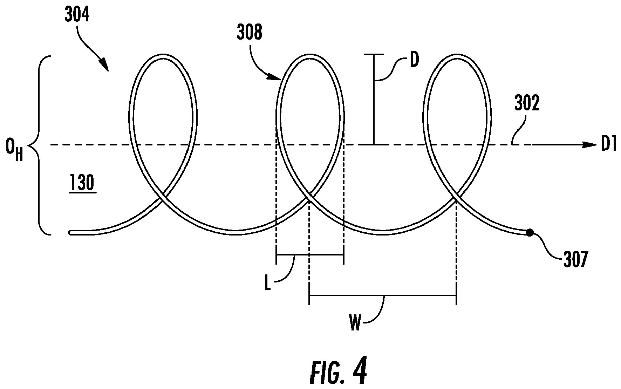

FIG. 4 illustrates a top down view of an exemplary embodiment of the modified beam position 304 of FIG. 3 across the build plane 130. In particular, FIG. 4 illustrates a modified beam position 304 that is oscillated around the nominal beam path trajectory 302 such as to produce a wobble effect which can, in turn, lead to modified build characteristics such as larger melt pool MP or building with fewer passes. However, it is appreciated herein that the modified beam position 304 can comprise other forms, including other symmetric and asymmetric configurations, as well as continuous or selective and intermittent deviations from the nominal beam path trajectory 302.

As illustrated in FIG. 4, the modified beam position 304 comprises a plurality of oscillations 308 that repeat along a first direction D1. That is, the beam spot 307 of the energy beam 144 (FIG. 3) can wobble as it travels across the build plane 130 in the first direction D1 to produce the plurality of oscillations 308. The wobbling of the beam spot 307 can allow for a larger melt pool in the build plane 130 than if the beam spot were to merely travel linearly along the nominal beam path trajectory 302 in parallel with the first direction D1. For instance, the beam spot 307 has a beam diameter defining the diameter that is incident on the build plane 130. The melt pool formed in the build plane 130 by the plurality of oscillations 308 can exceed the size of the beam diameter to consolidate a larger area via a single pass or fewer passes.

The modified beam position 304 can comprise a variety of parameters and configurations including with respect to the plurality of oscillations 308. For instance, each oscillation 308 may generally comprise an amplitude that corresponds to the Distance D the beam spot 307 travels away from the nominal beam path trajectory 302. Each oscillation 308 can also define length L corresponding to the length of the oscillation in the first direction D1 (i.e., the direction of the nominal beam path trajectory 302). Moreover, the modified beam position 304 can comprise a width W between oscillations 308.

The amplitude of each oscillation 308 may impact the size of the overall melt pool, which can have a diameter the same as or similar to the overall oscillation height OH. For instance, a greater amplitude (i.e., a greater distance D travelled away from the nominal beam path trajectory 302) can create a greater melt pool size which will, in turn, lead to the consolidation of larger amount of build material 118 in the build plane 130 from a single pass of the energy beam 144 (FIG. 3). The length L of each oscillation 608 may impact the amount of energy imparted on the build material 118 in the build plane 130 from the energy beam 144 by adjusting the total distance travelled by the beam spot 307 of the energy beam 144 over any particular area. A smaller length L can produce a greater travel distance of the beam spot 307 over a smaller area along the travel direction D 1 to increase the overall amount of energy imparted on the build material 118. Further, the frequency of oscillations 308 in the modified beam position 304 can be tailored by adjusting the width W between oscillations 308. A smaller width W results in oscillations 308 that are more frequent which in turn, similar to a smaller length L, can produce a greater travel distance of the beam spot 307 over a smaller area along the travel direction D1 to increase the overall amount of energy imparted on the build material 118. The length L and width W parameters may be adjusted to any suitable values that produce a suitable melt pool in the build plane 130. In some embodiments, such as that illustrated in FIG. 4, the oscillations 308 may be separated from one another. However, in some embodiments, the length L may be large enough or the width W may be small enough that the oscillations 308 may partially overlap with one another along the travel direction D1.

In some embodiments, the distance D, length L, and width W for each oscillation 192 can each remain constant along the modified beam position 304. However, in some embodiments, one or more of the distance D, length L, and width W can independently vary along the modified beam position 304 within oscillations 308. For example, the distance D may increase for certain oscillations 308 over a certain distance to temporarily grow the size of the melt pool with respect to the modified beam position 304.

The oscillations 308 may comprise a variety of configurations. In some embodiments, such as that illustrated in FIG. 4, the oscillations 308 may comprise symmetrical loops. In some embodiments, one or more of the oscillations 192 may additionally or alternatively comprise other configurations, such as asymmetrical loops, waves, linear or non-linear patterns, or combinations thereof. For instance, the modified beam position 304 may be configured as steps, that deviate from the nominal beam path trajectory 302 at different distances D away from the nominal beam path trajectory 302 at different points in time.

Moreover, while the nominal beam path trajectory 302 is illustrated as comprising a relatively linear path, it is appreciated that the first direction D 1 may additionally, or alternatively, comprise one or more non-linear portions such as bends, curves, turns, or the like.

In some embodiments, the modified beam position 304 can be used to correct for a tracking error in the beam spot 307. The tracking error refers to the difference between the actual location of the beam spot 307 and the intended or instructed location of the beam spot 307. These tracking errors can be a result of various steps or components in the overall build process. For instance, as appreciated herein, the optical scanner 332 will have a step response time that defines the time it takes to adjust the reflective device from its current position to its new position. During this intermediate transitionary time, the actual location of the beam spot 307 will not match with the instructed location of the beam spot 307 since movement of the components of the optical scanner 332 is not instantaneous. Alternatively, or additionally, the actual position of the beam spot 307 may deviate from the intended position due to loss in alignment, such as from drift or poor calibration.

The optical modulator 400 can thus facilitate a modified beam position 304 to account for the tracking error. That is, when the nominal beam path trajectory 302 would not put the beam spot 307 at the intended location, the optical modulator 400 can modify the position of the energy beam 144 to produce the modified beam position 304 which matches, or more closely matches, the intended location of the beam spot 307. This can, in turn, provide more accurate builds including, for example, sharper corners and fewer errors.

The optical modulator 400 comprises a device suitable for modifying the position of the beam spot 307 from the nominal beam path trajectory 302. For instance, in some embodiments, the optical modulator 400 can comprise a fast steering mirror, also referred to as an FSM.

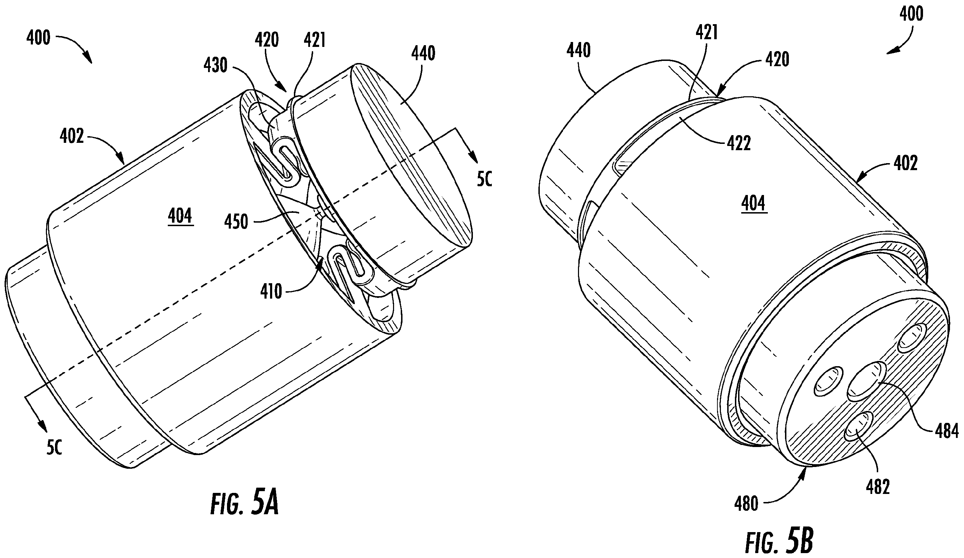

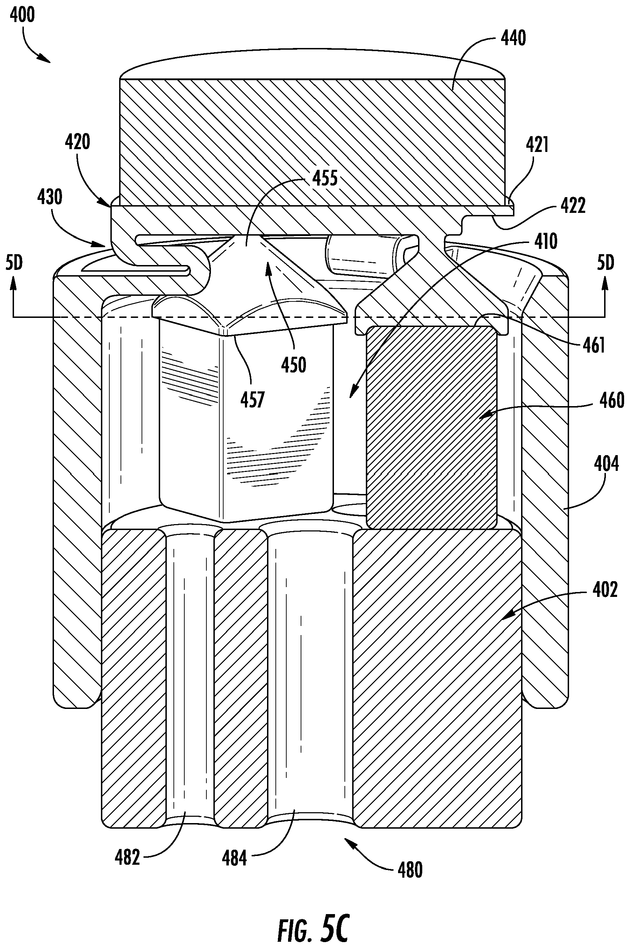

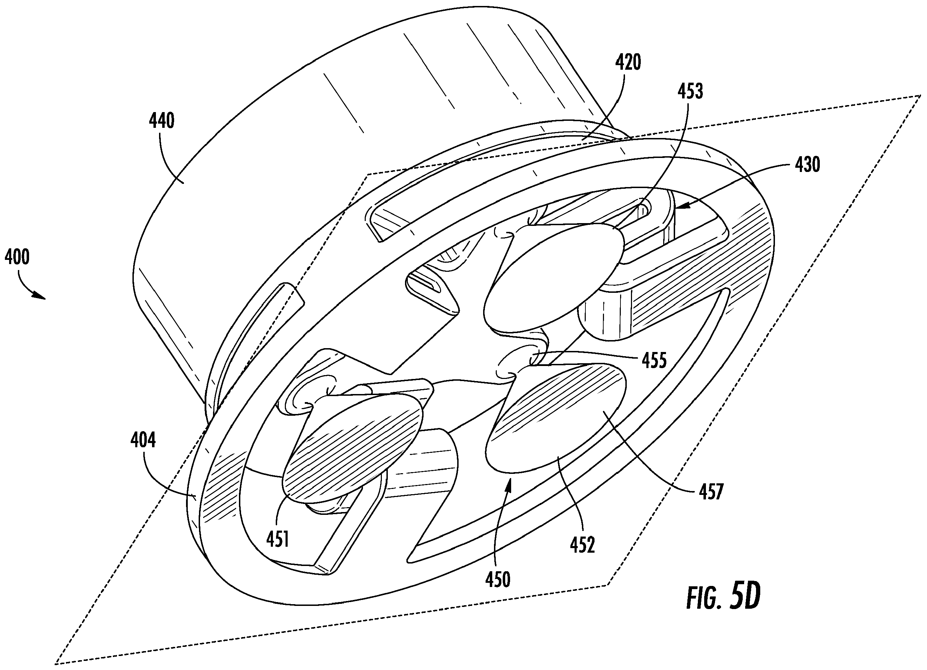

With reference to FIGS. 5A-5D, an exemplary embodiment of the optical modulator 400 is illustrated. FIG. 5A illustrates a right perspective view of the optical modulator 400. FIG. 5B illustrates a left perspective view of the optical modulator 400 of FIG. 5A including its underside. FIG. 5C illustrates a vertical cross sectional view of the optical modulator 400 of FIG. 5A. FIG. 5D illustrates a horizontal cross sectional view of the optical modulator 400 of FIG. 5C.

With collective reference to FIGS. 5A-5D, the optical modulator 400 includes a housing 402 having an outer wall 404 that defines an interior cavity 410. The optical modulator 400 also includes a support stage 420 and a reflective optic disposed on the support stage 420. The reflective optic 440 is any device or structure can at least partially reflect an energy beam incident thereon. For instance, the reflective optic 440 can comprise a mirror.

The support stage 420 is connected to the outer wall 404 of the housing 402 by a plurality of stabilizer joints 430. The stabilizer joints are support extensions that extend between the support stage 420 and the outer wall 404 to physically connect the two pieces together. The elements may be separated pieces that are joined together (e.g., welds, adhesives, or the like) or may be a unitary structure from the same material.

The stabilizer joints 430 serve to support the reflective optic 440 via the housing 402 of the optical modulator. Notably, the stabilizer joints 430 provide support for the reflective optic 440 independent of any actuation devices as part of the optical modulator 400. Thus, any actuation devices are not required to continuously support the reflective optic 440 and may thereby only need to contact and move the support stage 420 when actuating the reflective optic 440.

The plurality of stabilizer joints 430 can be configured in different configurations. For instance, as illustrated in FIGS. 5A-5D, the stabilizer joints are configured in a serpentine configuration. The back and forth shape of the serpentine configuration provides additional stabilization (e.g., shock absorption) of the support stage 420. In some embodiments, the plurality of stabilizer joints 430 may be configured as linear or curved arms extending between the outer wall 404 and the support stage 420. Moreover, the plurality of stabilizer joints 430 can be symmetrically distributed around the support stage 420, as illustrated, or may be asymmetrically distributed.

The optical modulator 400 further includes a plurality of flex joints 450 and a plurality of actuator elements 460. The plurality of flex joints 450 extend from a bottom side 422 of the support stage 420 and into the interior cavity 410. The plurality of actuator elements 460 are disposed in the interior cavity 410 and abut the plurality of flex joints 450. Thus, in operation, actuation of the plurality of actuator elements 460 causes the reflective optic 440 on the top side 421 support stage 420 to move.

The flex joints 450 can include any configuration that translates movement of the actuator elements 460 to the support stage 420. For instance, as illustrated, the flex joints 450 can have a tapered configuration. The tapered configuration can include a narrow top and a wide base, wherein the narrow top contacts the bottom side 422 of the support stage 420. Alternatively, or additionally, the flex joints 450 may comprise a columnar structure extending between the support stage 420 and the actuator elements 460.

The plurality of flex joints 450 can be disposed on the bottom side 422 of the support stage 420 to align with the actuator elements 460 as appreciated herein. For instance, as illustrated in FIGS. 5A-5D, the optical modulator 400 includes three actuator elements 460 to align with three actuator elements. The plurality of flex joints 450 can be symmetrically distributed about the bottom side 422 the support stage 420, as illustrated, or may be asymmetrically distributed.

The actuator elements 460 are a device that can transition between an extended (i.e., actuated) position that extends towards the support stage 420 and a retracted position that retracts away from the support stage 420. For instance, the actuator elements can comprise a piezoelectric material which changes shape based on the presence of an electric charge. In some embodiments, the actuator elements 460 can comprise lead zirconate titanate, also referred to as PZT.

The actuator elements 460 can be sized and positioned such that actuation of the plurality of actuator elements 460 causes the reflective optic 440 on the support stage 420 to move. That is, when the actuator elements 460 are actuated into an extended state, the actuator elements contact and push onto the flex joints 450, which in turn move the support stage 420.

Notably, the actuator elements 460 may be positioned in the interior cavity 410 such that they do not contact the flex joints 450 unless in an actuated (i.e., extended) position. In these embodiments, the support stage 420, and thereby the reflective optic 440, would solely be supported by the stabilizer joints 430 extending from the outer wall 404 of the housing 402 of the optical modulator 400. This can provide more stability and relieve unnecessary force the actuator elements 460 than if the actuator elements 460 supported the support stage 420 at all times.

A plurality of actuator elements 460 can be disposed in the interior cavity 410 to correspond with the flex joints 250. As best illustrated in the exemplary embodiment shown in FIGS. 5C and 5D, the optical modulator 400 can comprise a first actor element 461, a second actuator element 462, and a third actuator element (not illustrated). These can respectively be positioned and aligned with a first flex joint 451, second flex joint 452, and third flex joint 453. The three pairs of flex joints 450 and actuator elements 460 would provide three points of actuation on the support stage 420. However, it is also appreciated that a fewer or greater amount of actuator elements 460 and flex joints 450 may also be implemented.

The optical modulator 400 may further include one or more additional features to facilitate the actuation of its reflective optic 440. For instance, as best illustrated in FIGS. 5B and 5C, the housing 402 can include one or more hollow channels 480 extending through the housing 402 and into the interior cavity 410. The hollow channels can serve various functions. For instance, the hollow channels 480 may comprise air cooling channel 482 configured to facilitate air flow into and out of the interior cavity 410. The airflow can assist in the cooling of the actuator elements 460. Additionally, or alternatively, the hollow channels 480 can include a central channel 484 to provide a conduit for one or more connectors (e.g., electrical connectors, controls, etc.) to the actuator elements 460. While specific examples are illustrated and discussed herein, it is appreciated that these configurations are not intended to be limiting.

While an exemplary optical modulator 400 is illustrated in FIGS. 5A-5D, it is appreciated that other variants may additionally, or alternatively, be utilized within the irradiation devices 142 disclosed herein.

With reference again to FIGS, 3 and 4, the optical modulator 400 can thereby move the reflective optic 440 when the energy beam 144 is incident upon the reflective optic 440. The movement can thereby transition the energy beam 144 from its original nominal beam path trajectory 302 onto a modified beam position 304. The optical modulator 400 can have various operational performance parameters related to its ability to modify the position of the beam spot 307 and produce the modified beam position 304, including, but not limited to, step response time, amplitude and/or frequency bandwidth.

For instance, the optical modulator 400 has a first step time response that is shorter (i.e., faster) than a second step time response of the optical scanner 332 (discussed in more detail below). The first step response time for the optical modulator 400 can be less than or equal to 100 µs, less than or equal to 75 µs, less than or equal to 50 µs, or even less than or equal to 40 µs.

The optical modulator 400 has a first amplitude (i.e., total scannable coverage area on the build plane 130) that is smaller compared to a second amplitude of the optical scanner 332 (discussed in more detail below). The first amplitude for the optical modulator 400 can be less than or equal to 500 µm, less than or equal to 300 µm, or even less than or equal to 250 µs.

In embodiments where the modified beam position 304 is a plurality of oscillations 308 (such as illustrated in FIG. 4), the optical modulator 400 may undulate the energy beam 144 at a relatively high frequency bandwidth when compared to the optical scanner 332 (discussed in more detail below). The frequency bandwidth for the optical modulator 400 can be greater than or equal to 8 kHz, greater than or equal to 10 kHz, or even greater than or equal to 12 khz.

With reference again to FIG. 3, the irradiation device 142 further includes an optical scanner 332 downstream from the optical modulator 400. The optical scanner 332 is configured to translate the energy beam 144 along the build plane 130 of the additive manufacturing machine 102. Compared to the upstream optical modulator, the optical scanner 332 imparts larger scale movement of the energy beam 144 for traversal across the build plane 130. Thus, by dedicating the optical sensor 332 to these large movements across a larger section of the build plane 130, the adjustment rate of the energy beam 144 by the optical modulator 400 can be controlled independently of the translational movement of the energy beam 144 across the build plane 130 caused by the optical scanner 332. This can produce a faster build time over a larger area than if just the optical modulator 400 were used, but with greater control, accuracy, and adjustment or correction ability than if just the optical scanner 332 were used.

An exemplary scanner may include a galvo scanner, MEMS scanner, an electro-optic modulator, an acousto-optic modulator, or the like. To irradiate a layer of the powder bed 138, the irradiation device 142 directs the energy beam 144 across the respective portions of the build plane 130 to melt or fuse the portions of the powder material 120 that are to become part of the three-dimensional object 114.

The optical scanner 332 can thereby translate the energy beam 144 and its modified beam position 304 across the build plane 130 to build the three-dimensional object 114. The optical scanner 332 can translate the energy beam 144 at a relatively low frequency bandwidth when compared to the optical modulator 400 (discussed in more detail above). For instance, the optical scanner 332 may translate the energy beam 144 with a frequency bandwidth that is less than or equal to 4 kHz, greater than or equal to 2 kHz, or even greater than or equal to 1 khz.

The optical scanner 332 can have various operational performance parameters related to its ability to modify the position of the beam spot 307 and produce the modified beam position 304, including, but not limited to, step response time, amplitude and/or frequency bandwidth. As appreciated herein, the optical scanner has relatively larger movements than the optical modulator which can come at the cost of speed and frequency.

For instance, the optical scanner 332 has a second step time response that is longer (i.e., slower) than the first step time response of the optical modulator 400. The second step response time for the optical scanner 332 can be greater than or equal to 300 µs, greater than or equal to 400 µs, or even greater than or equal to 500 µs. Alternatively, or additionally, the second step response time is at least four times greater than the first step response time, at least six times greater than the first step response time, at least at least eight times greater than the first step response time, or even at least ten times greater than the first response time.

The optical scanner 332 also has a second amplitude (i.e., total scannable coverage area on the build plane 130) that is larger than the first amplitude of the optical modulator 400 (discussed in more detail below). The second amplitude for the optical scanner 332 can be greater than or equal to 150 mm, greater than or equal to 200 mm, or even greater than or equal to 250 mm. Alternatively, or additionally, the second amplitude is at least four times greater than the first amplitude, at least six times greater than the first amplitude, at least at least eight times greater than the first amplitude, or even at least ten times greater than the first amplitude.

In some embodiments, the optical modulator undulates the energy beam 144 at a first frequency, and the optical scanner translates the energy beam 144 at a second frequency less than the first frequency that is less than the first frequency. For instance, the first frequency may be greater or equal to 8 kHz and the second frequency may be less than or equal to 4 kHz. In some embodiments, the first frequency may be greater or equal to 10 kHz and the second frequency may be less than or equal to 2 kHz. In some embodiments, the first frequency may be greater or equal to 12 kHz and the second frequency may be less than or equal to 1 kHz. Alternatively, or additionally, the first frequency is at least four times greater than the second frequency, at least five times greater than the second frequency, or at least at least six times greater than the second frequency.

The optical modulator 400 and the optical scanner 332 thereby combine to impart relatively large scale and small scale movements of the energy beam 144 on the build plane 130. That is, the optical modulator 400 can impart relatively small scale and/or faster movements to adjust, correct or otherwise modify the modified beam position 304 from the nominal beam path trajectory 302. These modifications can, for example, produce symmetrical or asymmetrical oscillations such as for modifying the melt pool by wobbling the energy beam about a wider path than the originally produced linear trajectory. Alternatively, or additionally, these modifications can correct and resolve tracking error when the actual beam position does not equal the intended beam position (such as from a slow step response time). Conversely, the optical scanner 332 can impart relatively larger movements such as to translate the energy beam 144 across the build plane 130 along the nominal beam path trajectory 302. In combination, the overall irradiation device 142 can thereby translate the energy beam 144 across the build plane 130 along the nominal beam path trajectory 302 but while incorporating the modified beam position 304 to adjust, correct, or otherwise modify the energy beam 144 while building the three-dimensional object 114.

The irradiation device 142 can include one or more supplementary components to assist in the travel of the energy beam 144 from the beam generation device 300 to the build plane 130 of the additive manufacturing machine 102.

As illustrated in FIG. 3, the irradiation device 142 may include a focusing lens assembly 312 upstream the optical scanner 332. For instance, the focusing lens assembly 312 can be between the optical modulator 400 and the optical scanner 332 as illustrated. Alternatively, the focusing lens assembly 312 may be between the beam generation device 300 and the optical modulator 400.

The focusing lens assembly 312 may include one or more lenses or other optical elements configured to direct the respective beam segments onto the build plane 130.

The focusing lens assembly 312 may include one or more optical elements, such as lenses, mirrors, or the like, configured to focus the energy beam 144 prior to the build plane 130. Depending on the position of the focusing lens assembly 312 with respect to the optical modulator 400, the energy beam 144 passing through the focusing lens assembly 312 may comprise the nominal beam path trajectory 302 or the modified beam position 304.

The irradiation device 142 may include any one or more other optical elements that may be suitable for the particular embodiment. For example, the irradiation device may include one or more dichroic elements (not illustrated), such as dichroic mirror, configured to split a measurement beam from the energy beam 144. The measurement beam may propagate to a modulation sensor (not illustrated). The modulation sensor may include a charge-coupled device (e.g., a CCD sensor), an active-pixel sensor (e.g., a CMOS sensor), a quanta image device (e.g., a QIS sensor), or the like. The modulation sensor may be configured to provide data pertaining to modulation of the energy beam 144 by the optical modulator 400. The data may be utilized by a control system 104, such as for process monitoring and control of the optical modulator 400 and/or of the beam generation device 300. For example, the modulation sensor may be configured to determine whether the energy beam 144, as modulated by the optical modulator 400, corresponds to beam modulation instructions provided by the control system 104 and/or to provide adjustments to the beam modulation instructions and/or to the operation of the optical modulator 400 and/or the operation of the beam generation device 300.

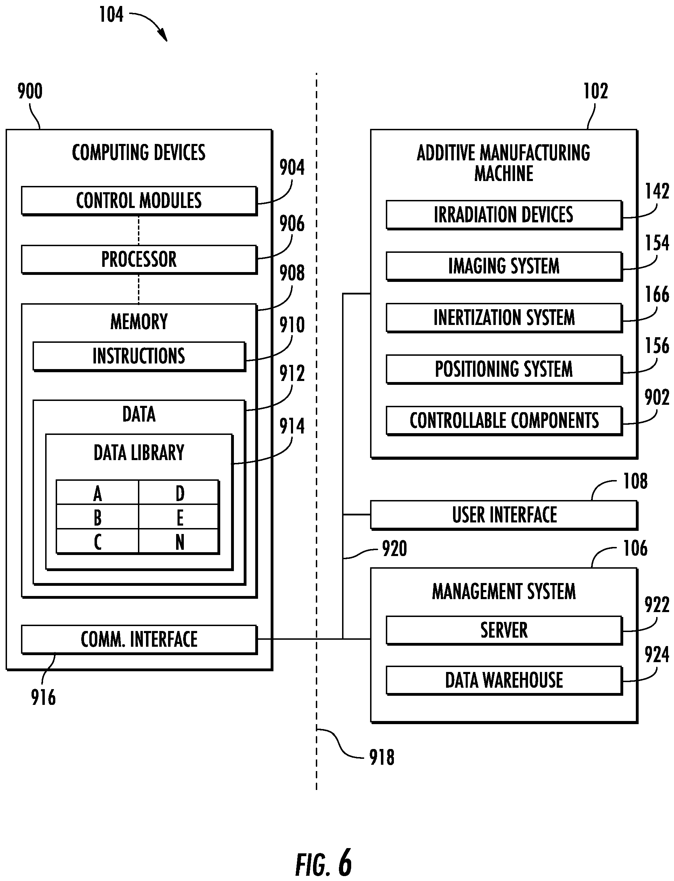

As shown in FIG. 6, a control system 104 may include one or more computing devices 900. The one or more computing devices 900 may be communicatively coupled with an additive manufacturing machine 102 or additive manufacturing system 100. For example, a computing device 900 may be communicatively coupled with one or more controllable components 902 of an additive manufacturing machine 102, such as one or more controllable components 902 associated with an irradiation devices 142, an imaging system 154, an inertization system 166, or a positioning system 156. Additionally, or in the alternative, a computing device 900 may be communicatively coupled with a management system 106 or a user interface 108. The one or more computing devices 900 may be located locally or remotely relative to an additive manufacturing machine 102.

The one or more computing devices 900 may include one or more control modules 904 configured to cause the computing device 900 to perform one or more control operations. The one or more control modules 904 may include one or more irradiation control modules 800. The one or more control modules 904 may include control logic executable to provide control commands configured to control the one or more controllable components 902 associated with an additive manufacturing machine 102.

The one or more computing devices 900 may include one or more processors 906 and one or more memory devices 908. The one or more processors 906 may include any suitable processing device, such as a microprocessor, microcontroller, integrated circuit, logic device, or other suitable processing device. The one or more memory devices 908 may include one or more computer-readable media, including but not limited to non-transitory computer-readable media, RAM, ROM, hard drives, flash drives, or other memory devices 908. The one or more control modules 904 may be implemented at least in part by the one or more processors 906 or the one or more memory devices 908.

As used herein, the terms "processor" and "computer" and related terms, such as "processing device" and "computing device", are not limited to just those integrated circuits referred to in the art as a computer, but broadly refers to a microcontroller, a microcomputer, a programmable logic controller (PLC), an application specific integrated circuit, and other programmable circuits, and these terms are used interchangeably herein. A memory device 908 may include, but is not limited to, a non-transitory computer-readable medium, such as a random-access memory (RAM), and computer-readable nonvolatile media, such as hard drives, flash memory, and other memory devices. Alternatively, a floppy disk, a compact disc-read only memory (CD-ROM), a magneto-optical disk (MOD), or a digital versatile disc (DVD) may also be used.

As used herein, the term "non-transitory computer-readable medium" is intended to be representative of any tangible computer-based device implemented in any method or technology for short-term and long-term storage of information, such as, computer-readable instructions, data structures, program modules and sub-modules, or other data in any device. The methods described herein may be encoded as executable instructions embodied in a tangible, non-transitory, computer readable media, including, without limitation, a storage device or a memory device. Such instructions, when executed by a processor, cause the processor to perform at least a portion of the methods described herein. Moreover, as used herein, the term "non-transitory computer-readable medium" includes all tangible, computer-readable media, including, without limitation, non-transitory computer storage devices, including, without limitation, volatile and nonvolatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

The one or more memory devices 908 may store information accessible by the one or more processors 906, including computer-executable instructions 910 that can be executed by the one or more processors 906. The computer-executable instructions 910 may include any set of instructions which when executed by the one or more processors 906 cause the one or more processors 906 to perform operations, including calibration operations, or additive manufacturing operations. For example, the computer-executable instructions 910 may be configured to cause the one or more processors 906 to perform one or more of the steps discussed or otherwise presented in this disclosure (e.g., method 700 illustrated in FIG. 6 and discussed below).

The memory devices 908 may store a plurality of data 912 accessible by the one or more processors 906. The data 912 may be past, current, real-time, or a combination thereof. The data 912 may be stored in a data library 914. As examples, the data 912 may include data 912 associated with or generated by an additive manufacturing system 100 or an additive manufacturing machine 102, including data 912 associated with or generated by a computing device 900, an additive manufacturing machine 102, a management system 106, or a user interface 108. The data 912 may also include other data sets, parameters, outputs, information, associated with an additive manufacturing system 100 or an additive manufacturing machine 102.

The one or more computing devices 900 may also include a communication interface 916 configured to communicate with various nodes on a communication network 918 via communication lines 920 that are wired or wireless. The communication interface 916 may include any suitable components for interfacing with one or more network(s), including for example, transmitters, receivers, ports, controllers, antennas, or other suitable components. The communication interface 916 may allow the one or more computing devices 900 to communicate with various nodes associated with the additive manufacturing machine 102, the management system 106, or a user interface 108. The communication network 918 may include, for example, a local area network (LAN), a wide area network (WAN), satellite communication (SATCOM) network, very high frequency (VHF) network, a high frequency (HF) network, a wireless fidelity (Wi-Fi) network, a worldwide interoperability for microwave access (WiMAX) network, a gatelink network, or any other communication network 918 for transmitting messages to or from the computing device 900 across the communication lines 920. The communication lines 920 of communication network 918 may include a data bus or a combination of wired or wireless communication links.

The management system 106 may include a server 922 or a data warehouse 924. As an example, at least a portion of the data 912 may be stored in the data warehouse 924, and the server 922 may be configured to transmit data 912 from the data warehouse 924 to the one or more computing device 900, or to receive data 912 from the one or more computing devices 900 and to store the received data 912 in the data warehouse 924 for further purposes. The server 922 or the data warehouse 924 may be implemented as part of the one or more computing devices 900 or as part of the management system 106.

While computer devices 900 and components thereof have been disclosed herein, it is appreciated that these specific embodiments are not intended to be limiting and alternatives may further be realized within the scope of this disclosure.

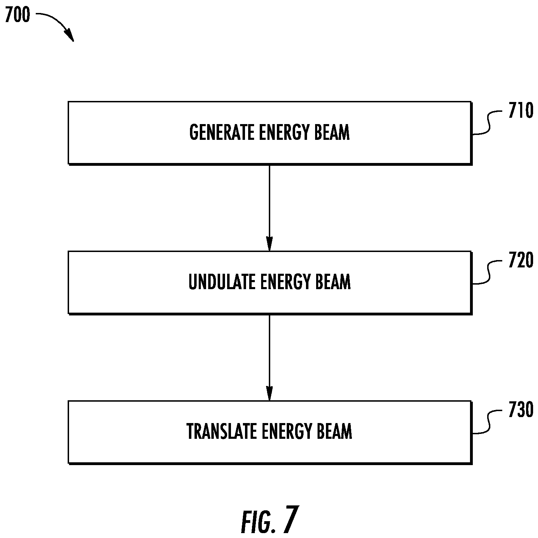

Referring now to FIG. 7, a method 700 is illustrated for additively manufacturing a three-dimensional object 114. While reference of the method 700 is generally made hereinafter to the exemplary embodiments illustrated in FIGS. 1-6, it is appreciated that the method 700 also applies to other exemplary aspects included not explicitly illustrated.

The method 700 first comprises, in step 710, generating an energy beam from a beam generation device. The method further includes, in step 720, modifying the energy beam, such as undulating the energy beam as illustrated in FIG. 4, using an optical modulator to modify the position of the energy beam from the nominal beam path trajectory to provide a modified beam position. The method also includes, in step 730, translating the nominal beam path trajectory along a build plane of an additive manufacturing machine using an optical scanner.

In some embodiments, the method 700 can further include adjusting power of the energy beam based on a position of a beam spot of the energy beam in the modified beam position, such as one or more control modules. Adjusting power refers to increasing or decreasing the power of the energy beam. For instance, as the beam spot undulates further away from the nominal beam path trajectory, the power of the energy beam may be increased or decreased. Conversely, the power of the energy beam may subsequently be decreased or increased, respectively, as the beam spot approaches the nominal beam path trajectory.

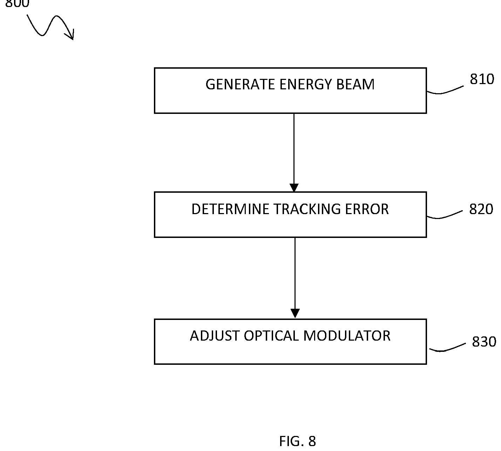

Referring now to FIG. 8, a method 800 is illustrated for additively manufacturing a three-dimensional object 114. While reference of the method 800 is generally made hereinafter to the exemplary embodiments illustrated in FIGS. 1-6, it is appreciated that the method 800 also applies to other exemplary aspects included not explicitly illustrated. Method 800 can include determining or receiving a tracking error for use in energy beam modification.

As illustrated, the method 800 first comprises, in step 810, generating an energy beam from a beam generation device. The method further includes, in step 820, determining or receiving a tracking error. The tracking error may be calculated or received by the same controller than controls movement of the optical modular 400, or may be calculated or received by a separate controller.

The method further includes, in step 830, modifying the energy beam, such as undulating the energy beam as illustrated in FIG. 4, using an optical modulator to modify the position of the energy beam from the nominal beam path trajectory to provide a modified beam position. The method can subsequently include (not illustrated), translating the nominal beam path trajectory along a build plane of an additive manufacturing machine using an optical scanner.

In some embodiments, the method 800 can further include adjusting power of the energy beam based on a position of a beam spot of the energy beam in the modified beam position, such as one or more control modules. Adjusting power refers to increasing or decreasing the power of the energy beam. For instance, as the beam spot undulates further away from the nominal beam path trajectory, the power of the energy beam may be increased or decreased. Conversely, the power of the energy beam may subsequently be decreased or increased, respectively, as the beam spot approaches the nominal beam path trajectory.

Further aspects are provided by the subject matter of the following clauses:

An irradiation device for an additive manufacturing machine for additively manufacturing three-dimensional objects, the irradiation device comprising a beam generation device configured to provide an energy beam travelling on a nominal beam path trajectory; an optical modulator comprising a reflective optic downstream from the beam generating device, the optical modulator configured to actuate the reflective optic to modify a position of the energy beam from the nominal beam path trajectory; and an optical scanner disposed downstream from the optical modulator, the optical scanner configured to translate the nominal beam path trajectory along a build plane of the additive manufacturing machine.

The irradiation device of any clause herein, wherein the optical modulator has a first step response time, and wherein the optical scanner has a second step response time greater than the first step response time.

The irradiation device of any clause herein, wherein the first step response time is less than or equal to 100 µs.

The irradiation device of any clause herein, wherein the second step response time is greater than or equal to 300 µs.

The irradiation device of any clause herein, wherein the second step response time is at least five times greater than the first step response time.

The irradiation device of any clause herein, wherein the optical modulator has a first amplitude, and wherein the optical scanner has a second amplitude greater than the first amplitude.

The irradiation device of any clause herein, wherein the first amplitude is less than or equal to 300 µm.

The irradiation device of any clause herein, wherein the second amplitude is greater than or equal to 250 mm.

The irradiation device of any clause herein, wherein the first amplitude is at least four times greater than the second amplitude.

The irradiation device of any clause herein, wherein the optical modulator undulates the energy beam at a first frequency, and wherein the optical scanner translates the energy beam at a second frequency less than the first frequency.

The irradiation device of any clause herein, wherein the first frequency is greater than or equal to 8 kHz.

The irradiation device of any clause herein, wherein the second frequency is less than or equal to 4 kHz.

The irradiation device of any clause herein, wherein the first frequency is at least four times greater than the second frequency.

The irradiation device of any clause herein, wherein the optical modulator comprises a fast steering mirror.

The irradiation device of any clause herein, wherein the optical scanner comprises a galvo scanner.

The irradiation device of any clause herein, further comprising a focusing lens assembly upstream the optical scanner.

The irradiation device of any clause herein, further comprising a controller, wherein the controller is configured determine or receive a tracking error of the energy beam, and wherein the controller is configured to actuate the reflective optic based on the tracking error.

The irradiation device of any clause herein, wherein the optical modulator comprises a housing comprising an outer wall defining an interior cavity; a support stage connected to the outer wall by a plurality of stabilizer joints; a reflective optic disposed on a top side of the support stage; a plurality of flex joints extending from a bottom side of the support stage into the interior cavity; and a plurality of actuator elements disposed in the interior cavity and abutting the plurality of flex joints, wherein actuation of the plurality of actuator elements causes the reflective optic on the support stage to move.

The irradiation device of any clause herein, wherein one or more of the plurality of actuator elements comprises a piezoelectric material.

A method of additively manufacturing a three-dimensional object, the method comprising generating an energy beam having a nominal beam path trajectory from a beam generation device; modifying a position of the energy beam from the nominal beam path trajectory using an optical modulator; and translating the nominal beam path trajectory along a build plane of an additive manufacturing machine using an optical scanner downstream from the optical modulator.

The method of any clause herein, further comprising determining a tracking error of the energy beam; and modifying the position of the energy beam using the optical modulator based on the tracking error.

The method of any clause herein, further comprising adjusting power of the energy beam based on a distance of a beam spot away from the nominal beam path trajectory.

An optical modulator comprising a housing comprising an outer wall defining an interior cavity; a support stage connected to the outer wall by a plurality of stabilizer joints; a reflective optic disposed on a top side of the support stage; a plurality of flex joints extending from a bottom side of the support stage into the interior cavity; and a plurality of actuator elements disposed in the interior cavity and abutting the plurality of flex joints, wherein actuation of the plurality of actuator elements causes the reflective optic on the support stage to move.

The optical modulator of any clause herein, wherein the plurality of actuator elements comprises three actuator elements symmetrically distributed in the interior cavity.

The optical modulator of any clause herein, wherein one or more of the plurality of actuator elements comprises a piezoelectric material.

The optical modulator of any clause herein, wherein one or more of the stabilizer joints comprises a serpentine configuration.

The optical modulator of any clause herein, wherein one or more of the flex joints comprises a tapered configuration having a narrow top and a wide base, wherein the narrow top contacts the bottom side of the support stage.

The optical modulator of any clause herein, further comprising a plurality of hollow channels extending through the housing and into the interior cavity.

A method according to one or more embodiments disclosed herein.

An additive manufacturing system according to one or more embodiments disclosed herein.

An additive manufacturing apparatus according to one or more embodiments disclosed herein.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. An irradiation device for an additive manufacturing machine for additively manufacturing three-dimensional objects, the irradiation device comprising:
a beam generation device configured to provide an energy beam travelling on a nominal beam path trajectory;
an optical modulator comprising a reflective optic downstream from the beam generating device, the optical modulator configured to actuate the reflective optic to modify a position of the energy beam from the nominal beam path trajectory; and
an optical scanner disposed downstream from the optical modulator, the optical scanner configured to translate the nominal beam path trajectory along a build plane of the additive manufacturing machine.

2. The irradiation device of claim 1, wherein the optical modulator has a first step response time, and wherein the optical scanner has a second step response time greater than the first step response time.

3. The irradiation device of claim 2, wherein the first step response time is less than or equal to 100 µs, and wherein the second step response time is greater than or equal to 300 µs.

4. The irradiation device of claim 2, wherein the second step response time is at least five times greater than the first step response time.

5. The irradiation device of claim 1, wherein the optical modulator has a first amplitude, and wherein the optical scanner has a second amplitude greater than the first amplitude.

6. The irradiation device of claim 5, wherein the first amplitude is less than or equal to 300 µm, and wherein the second amplitude is greater than or equal to 250 mm.

7. The irradiation device of claim 1, wherein the optical modulator undulates the energy beam at a first frequency, and wherein the optical scanner translates the energy beam at a second frequency less than the first frequency.

8. The irradiation device of claim 7, wherein the first frequency is greater than or equal to 8 kHz, and wherein the second frequency is less than or equal to 4 kHz.

9. The irradiation device of claim 7, wherein the first frequency is at least four times greater than the second frequency.

10. The irradiation device of claim 1, further comprising:
a focusing lens assembly upstream the optical scanner.

11. The irradiation device of claim 1, further comprising:
a controller, wherein the controller is configured determine or receive a tracking error of the energy beam, and wherein the controller is configured to actuate the reflective optic based on the tracking error.

12. The irradiation device of claim 1, wherein the optical modulator comprises:
a housing comprising an outer wall defining an interior cavity;
a support stage connected to the outer wall by a plurality of stabilizer joints;
a reflective optic disposed on a top side of the support stage;
a plurality of flex joints extending from a bottom side of the support stage into the interior cavity; and
a plurality of actuator elements disposed in the interior cavity and abutting the plurality of flex joints, wherein actuation of the plurality of actuator elements causes the reflective optic on the support stage to move.

13. The irradiation device of claim 12, wherein one or more of the plurality of actuator elements comprises a piezoelectric material.

14. A method of additively manufacturing a three-dimensional object, the method comprising:
generating an energy beam having a nominal beam path trajectory from a beam generation device;
modifying a position of the energy beam from the nominal beam path trajectory using an optical modulator; and
translating the nominal beam path trajectory along a build plane of an additive manufacturing machine using an optical scanner downstream from the optical modulator.

15. An optical modulator comprising:
a housing comprising an outer wall defining an interior cavity;
a support stage connected to the outer wall by a plurality of stabilizer joints;
a reflective optic disposed on a top side of the support stage;
a plurality of flex joints extending from a bottom side of the support stage into the interior cavity; and
a plurality of actuator elements disposed in the interior cavity and abutting the plurality of flex joints, wherein actuation of the plurality of actuator elements causes the reflective optic on the support stage to move.
